# EUROPEAN PATENT APPLICATION

(11) **EP 3 813 264 A1**
(43) Date of publication of application: **28.04.2021**
(21) Application number: 19205316.3
(22) Date of filing: 25.10.2019
(51) Int. Cl.: H04B 1/16, H04B 1/3883, H02J 7/00

(54) **MOBILE COMMUNICATION DEVICE AND METHOD FOR PROVIDING UNINTERRUPTED POWER TO A MOBILE COMMUNICATION DEVICE**

(71) Applicant: Rohde & Schwarz GmbH & Co. KG, 81671 München (DE)
(72) Inventor: MACKH, Rainer, 82269 Geltendorf (DE)
(74) Representative: Isarpatent

(57) **Abstract**

The present invention relates to a battery driven mobile communication device with an uninterrupted power supply during replacement of a battery. For this purpose, two batteries are provided in the power supply of the communication device. Thus, the communication device may be powered by power of the second battery when the first battery is replaced.

## Description

### TECHNICAL FIELD

The present invention relates to a communication device for wireless communication. The present invention further relates to a method for providing uninterrupted power to a communication device, in particular a mobile communication device.

### BACKGROUND

Although applicable in principle to any mobile device, the present invention and its underlying problem will be hereinafter described in connection with a mobile communication device such as a handheld radio.

Mobile communication devices, such as handheld radios require a power supply for operating a device. For this purpose, a battery, in particular a rechargeable battery may be used. However, when replacing the battery, the power supply of the communication device is interrupted. Thus, the communication device has to be shut down before replacing the battery. After replacing the battery, the communication device is restarting. Depending on the applications running on the communication device, shutdown and the restart of the communication device may take a relative long time period, and the communication device cannot be operated during this time period.

However, in some fields of application such an interruption of the communication may raise an issue. For example, in the field of rescue services or military applications, it is desirable to shorten or even avoid an interruption of the communication.

Against this background, the problem addressed by the invention is to provide an uninterrupted power supply of a mobile device such as a wireless communication device when replacing batteries.

### SUMMARY

The present invention solves this problem with a mobile communication device and a method for providing uninterrupted power to a mobile communication device with the features of the independent claims. Further advantageous embodiments are subject-matter of the dependent claims.

According to a first aspect, a communication device for wireless communication is provided. In particular, the communication device may be a mobile or portable communication device. The communication device comprises a transceiver, a processing unit and a power supply. The transceiver may be configured to receive wireless radio signals. The transceiver is further configured to transmit wireless radio signals. The processing unit is electrically coupled to the transceiver. The processing unit is configured to process the received radio signals. The power supply comprises a first battery and a second battery. The power supply is configured to provide electrical power from the first battery and/or the second battery to the transceiver and the processing unit. In particular, the first battery is detachable connected to the communication device.

According to a second aspect, a method for providing uninterrupted power to a communication device is provided. The communication device may be a mobile communication device, in particular a portable communication device such as a portable radio or the like. The communication device comprises a first battery and a second battery. The method comprises a step of providing power from the first battery to the transceiver and the processing unit of the communication device. The method further comprises a step of switching the power supply to provide power from the second battery to the transceiver and the processing unit. Further, the method comprises a step of detaching the first battery after the power supply has switched to the second battery.

The present invention is based on the fact that removing a battery of a mobile device such as a portable communication device, may cause an interruption of the power supply. Thus, replacing the battery may require shutting down the device, replacing the battery and restarting the communication device after a new battery has been inserted. These operations require a time period during which the device cannot be operated. However, in some fields of application, an interruption of a communication may cause a serious issue.

In order to overcome this problem, the present invention provides a solution for replacing a battery of a mobile device, such as a portable communication device, without interrupting the power supply. Since the power supply to the elementary components of the communication device is maintained during replacing the battery, the operation of the device is not interrupted. Consequently, a communication with such a portable communication device is not interrupted during the replacement of the battery.

The communication device may be any kind of communication device, in particular a battery driven communication device. For example, the communication device may be a mobile or portable communication device, which transmits radio frequency signals and receives radio frequency signals. For example, the communication device may be a handheld radio or the like. In particular, the communication device may be a communication device, which is controlled and/or operated by a processing unit. Accordingly, the processing unit may comprise one or more processors with corresponding instructions. For example, the processor may be communicatively coupled with a memory, which stores the respective instructions. Accordingly, the processor may load and executes the instructions from the memory in order to perform the desired operations. The processor may further execute an operating system that loads and executes the instructions. The processor may be, for example, an Intel processor that runs a Windows or Linux operating system that loads and executes the instructions. However, the processor may be any other kind of processor for executing the respective instructions.

For example, the processing unit may receive digital data and convert the digital data in signals, which may be transmitted by the transceiver. The processing unit may also receive signals from the transceiver and convert the received signals to data, in particular digital data, which may be further processed and output to a user or a further device via a communication link. For example, a specific modulation/demodulation may be applied, the data may be encoded/decoded or any other appropriate operation may be performed. For example, a specific frequency hopping scheme may be applied for further improving the reliability of a communication link.

The transceiver may be any kind of transceiver for transmitting the signals or data obtained from the processing unit, in particular for transmitting wireless radio frequency signals. The transceiver may also receive wireless radio frequency signals and provide the received signals to the processing unit for further processing. For this purpose, the transceiver may be coupled with one or more appropriate antennas for transmitting and receiving wireless signals.

For operating the transceiver and the processing unit, the transceiver and the processing unit are powered by the power supply. For example, a direct current voltage with a predetermined voltage or within a predetermined voltage range is provided to the transceiver and the processing unit. For this purpose, power may be provided by one or more batteries. Since a battery usually only provides a limited amount of power, the batteries have to be removed and replaced by other batteries when the battery power becomes weak. The removed batteries may be charged by an external charging device.

In order to maintain the power supply of the communication device during the replacement of a first battery, for example a main battery, a further, second battery may be provided. Accordingly, before removing the first battery and replacing the first battery by another battery, the power supply may be switched over to the second battery. In this way, an uninterrupted power supply of the communication device, in particular the transceiver and the processing unit is provided. The weak first battery may be removed and replaced by a further, charged battery without any interruption in the operation of the communication device.

As long as the transceiver and the processing unit are powered by the second battery, it is possible to remove the first battery and to replace the first battery by another battery. After connecting/inserting the new battery, the power supply can be switched back to the newly inserted first battery. In this way, an uninterrupted power supply to the communication device, in particular the processing unit and the transceiver is achieved during the process of replacing the battery of the communication device.

Further embodiments of the present invention are subject of the further subclaims and of the following description, referring to the drawings.

In a possible embodiment, the power supply is configured to provide electrical power from the first battery to the transceiver and the processing unit when the first battery is attached to the communication device. The power supply may be further configured to provide electrical power from the second battery to the transceiver and the processing unit before detaching the first battery from the communication device. For example, the first battery may be a main battery, especially a battery with an electrical capacity larger than the electrical capacity of the second battery. In particular, the capacity of the second battery may be limited to an amount, which is sufficient for operating the communication device for a short time period, which is necessary for replacing the first battery by another first battery.

Even though the term "battery" is used for the first battery and the second battery, it may be also possible to use any other appropriate type of electrical storage device. For example, a supercapacitor may be also used as a second battery.

In a possible embodiment, the second battery is firmly installed in the communication device. For example, the second battery may be an electrical storage device, which is soldered on a printed circuit board of the communication device. It may be also possible to install the second battery in a housing of the communication device. Accordingly, the second battery cannot be replaced without opening the housing of the communication device.

In contrast to this, the first battery may be detachable connected to the communication device. In other words, the first battery may be easily removed without opening the housing of the communication device and/or using a tool or the like. For example, the first battery may be attached to the communication device by means of a quick release mechanism or the like.

In a possible embodiment, the second battery may be detachable connected to the communication device. Accordingly, it may be also possible to attach and detach the second battery. In particular, it may be possible to disconnect and remove the second battery from the communication device without opening the housing of the communication device or using additional tools.

In a possible embodiment, the first battery and the second battery can be removed independently of each other. In other words, the first battery and the second battery are separately attached to the communication device in such a manner that the first battery and the second battery can be detached independent of each other. Thus, either the first battery or the second battery may be disconnected. Especially, it may be possible that the first battery and the second battery may be batteries of a same type or configuration, or at least have same or similar connectors for attaching the first and the second battery to the communication device.

In a possible embodiment, the second battery may be only detachable, if the first battery is removed. For example, the first battery and the second battery may be arranged in a configuration such as a cascade or the like. For example, the second battery may be directly connected to the communication device, and the first battery may be connected to the second battery. Alternatively, the second battery may be mounted in a position, which can be only reached if the first battery is already removed.

In a possible embodiment, the communication device comprises a coupling device. The coupling device may be configured to electrically and mechanically couple the first battery to the communication device. Furthermore, a second coupling device may be provided for electrically and mechanically coupling the second battery to the communication device. In particular, the coupling device may comprise a quick release mechanism for attaching/detaching the first battery to the communication device. In this way, the first battery can be easily attached/detached to the communication device.

In a possible embodiment, the communication device comprises a charging unit. The charging unit may be configured to charge the second battery. In particular, the second battery may be charged based on power provided by the first battery. In this way, the second battery can be charged automatically without removing the second battery. Furthermore, the second battery may be even charged without connecting the communication device to an external power supply.

In a possible embodiment, the communication device comprises a switch. The switch may be configured to switch the power supply for the transceiver and the processing unit from the first battery to the second battery. Accordingly, the power supply may be switched over to the second battery before removing the first battery from the communication device. The switch may be an electrical switch comprising semiconductors. Alternatively, the switch may be a mechanical switch, for example a switch comprising relays or the like. For example, the switch may be automatically triggered, when a user activates a mechanism for releasing the first battery from the communication device. The switch may change the power supply from the second battery to the first battery after detecting that a first battery has been attached to the communication device.

In a possible embodiment, the communication device comprises a power connector. The power connector may be configured to connect an external power source to the power supply of the communication device. Accordingly, it may be optionally possible to provide external power to the communication device. The external power may be used, for example, for power supply of the communication device, in particular the transceiver and the processing unit may be provided with external power during replacement of the first battery and/or the second battery. Furthermore, the external power source may be used for charging the first battery and/or the second battery. For example, the external power source may be a power source from an electrical system of a vehicle or an external battery. However, any other external power source may be possible, too.

In a possible embodiment, the processing unit may be configured to generate radio signals. The radio signals generated by the processing device may be provided to the transceiver. The transceiver may only receive radio signals, but also transmit radio signals. Accordingly, a bidirectional communication with one or more communication partners can be established.

In a possible embodiment, the communication device may be a handheld radio. For example, the communication device may be a radio of an emergency service. The communication device may be also a military radio. In particular, the communication device may be a communication device applying a secure communication. For example, the communication may be secured by encrypting the signals transmitted by the communication device and decrypting the received signals. Furthermore, frequency hopping or any other further feature for improving the security and/or reliability of the communication may be also applied.

With the present invention it is therefore now possible to provide a stable and uninterrupted power supply to a mobile device such as a handheld communication device when replacing batteries of the device. In particular, the power supply of the device is maintained by further battery during a replacement process. In this way, the operation of the device can be continued even though the internal power supply by the main battery is interrupted.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1:: shows a block diagram of an embodiment of a communication device according to an embodiment;
- Fig. 2:: shows a block diagram of another embodiment of a communication device according to an embodiment;
- Fig. 3:: shows a further embodiment of a communication device according to an embodiment;
- Fig. 4:: shows still a further embodiment of a communication de-vice according to an embodiment; and
- Fig. 5:: shows a flow diagram of an embodiment of a method for providing uninterrupted power.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

### DETAILED DESCRIPTION OF THE DRAWINGS

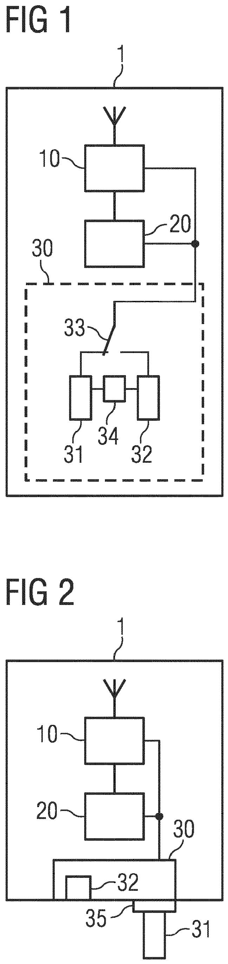

Figure 1 shows a block diagram of a communication device 1 according to an embodiment. The communication device 1 may be a mobile communication device, in particular a portable communication device such as a handheld radio or the like. The communication device 1 may comprise a transceiver 10 for receiving wireless signal by means of an antenna, and for transmitting wireless signals to the environment via the antenna. The transceiver 10 may be any kind of appropriate transceiver for transmitting and receiving wireless signals. For this purpose, the transceiver 10 may comprise elements like filters, oscillators, mixers, amplifiers, attenuators etc.

Transceiver 10 may be coupled to a processing unit 20. Processing unit 20 may be provided with the signals received by transceiver 10. Accordingly, processing unit 20 may process the received signals. For example, processing unit 20 may demodulate the signals, decode encrypted data included in the received signals, or apply any other processing to the received signals. Furthermore, processing unit 20 may process data or signals to be transmitted and provide the processed data or signals to transceiver 10. For example, processing unit 20 may apply an encoding for encrypting the data, perform a modulation or any other processing to the data or signals to be transmitted.

Processing unit 20 may also control the operation of transceiver 10. For example, processing unit 20 may set a frequency or transmission channel in transceiver 10 for receiving or transmitting the wireless signals. Furthermore, processing unit 20 may control, for example a frequency hopping scheme or any other feature of the transmission or reception process. For example, processing unit 20 may control the transmission power or the sensitivity of a reception. However, it is understood that a processing unit 20 may also perform any other appropriate operation in connection with transmission or reception of wireless signals.

Transceiver 10 and processing unit 20 may be provided with power by means of a power supply 30. However, it is understood that power supply 30 may also provide power to further components of communication device 1.

Since the communication device 1 is a mobile communication device, in particular a portable communication device such as a handheld radio or the like, a mobile power supply is required. For this purpose, the communication device may comprise a battery based power supply 30. The power supply 30 comprises at least two batteries. In particular, power supply 30 may comprise a first battery 31 and a second battery 32. For example, the first battery 32 may be a main battery for providing electrical power during a normal operation of the communication device 1. The second battery 32 may be an additional battery, which may provide power to the communication device 1 in a time period when the first battery 31 is replaced. In order to replace the first battery 31 by another battery, at least the first battery 31 may be a removable or detachable battery. For example, the first battery 31 may be attached to the communication device 1 in such a manner that the first battery 31 can be detached without opening a housing of the communication device 1 and without the need of additional tools. For example, a quick release mechanism or the like may be provided for quickly attaching and detaching the first battery 31. Accordingly, at least the first battery 31 may be electrically and mechanically connected to the communication device 1 without opening the housing of the communication device and without the need of additional tools.

By such a configuration of a power supply with at least two batteries 31, 32, the power supply of the transceiver 10 and the processing unit 20 and - if necessary - further components of the communication device 1, can be provided either by the first battery 31 or the second battery 32. For example, a switch 33 may be provided for switching the power supply of the transceiver 10 and the processing unit 20 between the first battery 31 and the second battery 32. For example, the power supply of the communication device 1 may be provided by the first battery 31 as long as the power of the first battery 31 is sufficient. When the first battery 31 becomes weak, the power supply may be switched over to the second battery 32. For example, a charging state of the first battery 31 may be monitored based on a voltage provided by the first battery 31. When the voltage provided by the first battery 31 falls below a predetermined threshold value, the power supply may be changed into the second battery 32. However, it may be also possible to change the power supply between the first battery 31 and the second battery 32 based on any other appropriate parameter. Alternatively, it may be also possible to change the power supply manually between the first battery 31 and the second battery 32.

In particular, the power supply of the communication device 1 may be switched to the second battery 32 before removing the first battery 31. After replacing a weak first battery 31 by another first battery 31, the power supply may be changed back to the first battery 31. In this way, a replacement of the first battery 31 can be performed without interrupting the power supply of the communication device 1.

The second battery 32 may be firmly installed in the communication device 1. In other words, the second battery 32 may be installed in the communication device 1 in such a manner that it may be required to open a housing of the communication device 1. Furthermore, it may be required to use a tool for removing the second battery 32 from the communication device 1.

Since the second battery 32 provides electrical power to the communication device 1 during the replacement of the first battery 31, the second battery 32 is discharged during this period of time. In order to recharge the second battery 32, the second battery 32 may be charged by power provided by the first battery 31. For this purpose, a charging unit 34 may be provided. In particular, charging unit 34 may be a part of the power supply 30. Accordingly, charging unit 34 may charge the second battery 32 based on power provided by the first battery 31. In particular, the second battery 32 may be charged to a predetermined state of charge after attaching a new first battery 31 to the communication device 1. In this way, it is possible that the second battery 32 can provide power to the communication device 1, when the first battery 31 becomes weak and has to be replaced.

Since the communication device 1 is provided by power from the first battery 31 as long as the first battery 31 is charged, and the second battery 32 only has to provide power when the first battery 31 becomes weak and should be replaced, the capacity of the second battery 32 may be less than the capacity of the first battery 31. Thus, the second battery 32 may be a small battery or another appropriate electrical storage device, for example a supercapacitor or the like. However, it may be also possible that the first battery 31 and the second battery 32 may be batteries of a same type. Furthermore, it may be also possible that not only the first battery 31, but also the second battery 32 may be detachable attached to the communication device 1.

Figure 2 shows a block diagram of another embodiment of a communication device 1. It is understood that all features of the individual embodiments may be combined, if possible. Thus, all explanations in connection with Figure 1 also apply to the embodiments according to Figure 2 and the following embodiments.

As can be seen in Figure 2, first battery 31 and a second battery 32 may be attached to the communication device 1 separately. For example, the first battery 31 as well as the second battery 32 may be detachable attached to the communication device 1. For example, a coupling device 35 may be provided for electrically and mechanically coupling the first battery 31 and/or the second battery 32 to the communication device 1. For this purpose, coupling device 35 may provide holding elements, for example grooves or rails for mechanically coupling the first battery 31 or the second battery 32 with the communication device 1. Furthermore, coupling device 35 may comprise connectors for electrically coupling the battery 31, 32 with the communication device 1. It is understood, that any appropriate manner for electrically and mechanically coupling the batteries 31, 32 with the communication device 1 may be possible.

In case that both batteries, i.e. the first battery 31 and the second battery 32 can be detached, the batteries 31, 32 can be charged by an external charging station or the like. Since the communication device 1 may be powered by two batteries 31, 32, it is possible to remove one of these batteries 31, 32 and replace the respective batteries 31, 32 by another battery without interrupting the power supply of the communication device 1.

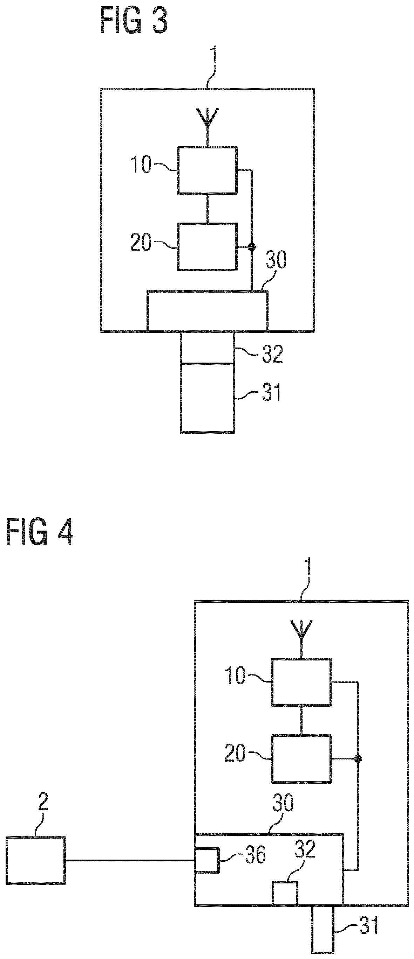

Figure 3 shows a further embodiment of a communication device 1, which is powered by two batteries 31, 32. In this embodiment, the second battery 32 only can be removed, if the first battery 31 has been removed before. For example, the second battery 32 may be directly connected to the communication device 1, and the first battery 31 is connected to the second battery 32. However, any other configuration may be possible, too. For example, second battery 32 may be located in a recess of the communication device, and this recess is covered by the first battery 31 when the first battery 31 is attached to the communication device. In such a configuration, the second battery 32 usually may remain attached to the communication device 1. Accordingly, the second battery 32 may be charged by a power provided by the first battery 31. However, if the capacity of the second battery 32 for storing electrical energy decreases, the second battery 32 may be easily replaced by another second battery 32.

Figure 4 shows a further embodiment of a communication device 1. The communication device 1 with the first battery 31 and the second battery 32 may have any configuration as described above in connection with Figures 1 to 3. Further to this, the communication device 1, in particular a power supply 30 may comprise a power connector 36 for connecting an external power source to the communication device 1. For example, the external power source 2 may be an electrical network of a vehicle or an external battery pack. However, any other external power source may be possible, too. In this way, it is possible to provide power for operating the communication device 1 by an external power source 2. For example, external power may be provided to communication device 1 during replacement of the first battery 31 and/or the second battery 32. In particular, the communication device 1 may be powered by an external power source 2, when replacing the first battery 31 and the second battery 32 at the same time.

The communication device 1 may be, for example, a communication device of an emergency service. Especially, communication devices for emergency services shall provide a continuous communication without interruption. By maintaining the power supply of the communication device during the replacement of the battery 32, such a continuous communication can be provided.

Furthermore, communication device 1 may be a communication device for military applications, for example a military radio. However, it is understood, that any other kind of communication device, in particular mobile communication device such as portable radios or the like may be possible.

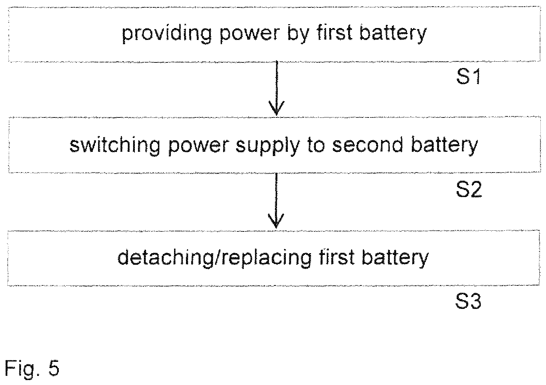

Figure 5 shows a flow diagram of a method for providing uninterrupted power to a communication device 1 according to an embodiment. The method may comprise any kind of step for operating a communication device as described above in connection with Figures 1 to 4. Furthermore, the above described communication device may be configured to perform an operation as described in the following.

The communication device 1 may be a mobile communication device, for example a portable communication device such as a handheld radio. The communication device may comprise a first battery 31 and a second battery 32.

In a first step S1, power may be provided from the first battery 31 to the communication device, in particular to a transceiver 10 and a processing unit 20 of the communication device. In a second step S2, the power supply may be switched over, and the communication device 1, in particular the transceiver 10 and the processing unit 20 are powered by power from the second battery 32. After the power supply has switched to the second battery 32, the first battery 31 may be detached in step S3.

The method may further comprise attaching the first battery 31 to the communication device 1. In particular, a charged first battery 31 may be attached to the communication device 1. Subsequently, the power supply may be switched back to provide power from the first battery 31 to the communication device, in particular the transceiver 10 and the processing unit 20.

Further, the method may comprise charging the second battery 32 by power from the first battery 31.

The switching of the power supply from the first battery 31 to the second battery 32 may be performed manually. Alternatively, it may be also possible that the switching from the first battery 31 to the second battery 32 may be performed automatically. For example, the power supply may be switched from the first battery 31 to the second battery 32, when the state of charge of the first battery 31 falls below a predetermined threshold, or the voltage provided by the first battery 31 falls below a predetermined value. However, any other parameter for switching the power supply between the first battery 31 and the second battery 32 may be possible, too.

Summarizing, the present invention provides a battery driven communication device with an uninterrupted power supply during replacement of a battery. For this purpose, two batteries are provided in the power supply of the communication device. Thus, the communication device may be powered by power of the second battery when the first battery is replaced.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

## Claims

1. Mobile communication device (1) for wireless communication, comprising:
a transceiver (10) configured to receive wireless radio signals and transmit wireless radio signals;
a processing unit (20) electrically coupled to the transceiver (10) and configured to process the received radio signals; and
a power supply (30) configured to provide electrical power to the transceiver (10) and the processing unit (20),
the power supply (30) comprising a first battery (31) and a second battery (32),
wherein the first battery (31) is detachable connected to the communication device (1).

2. Communication device (1) according to claim 1, wherein the power supply (30) is configured to provide electrical power from the first battery (31) to the transceiver (10) and the processing unit (20) when the first battery (31) is attached to the communication device (1), and to provide electrical power from the second battery (32) to the transceiver (10) and the processing unit (20) when the first battery (31) is detached from the communication device (1).

3. Communication device (1) according to claim 1 or 2, wherein the second battery (32) is firmly installed in the communication device (1).

4. Communication device (1) according to claim 1 or 2, wherein the second battery (32) is detachable connected to the communication device (1).

5. Communication device (1) according to claim 4, wherein the first battery (31) and the second battery (32) can be removed independently of each other.

6. Communication device (1) according to claim 4, wherein the second battery (32) is only detachable if the first battery (31) is removed.

7. Communication device (1) according to any of claims 1 to 6, comprising a coupling device (35) configured to electrically and mechanically couple the first battery (31) to the communication device (1).

8. Communication device (1) according to any of claims 1 to 7, comprising a charging unit (34) configured to charge the second battery (32) based on power provided by the first battery (31).

9. Communication device (1) according to any of claims 1 to 8, comprising a switch (33) configured to switch the power supply for the transceiver (10) and the processing unit (20) from the first battery (31) to the second battery (32).

10. Communication device (1) according to any of claims 1 to 9, comprising a power connector (36) configured to connect an external power source to the power supply of the communication device (1).

11. Communication device (1) according to any of claims 1 to 10, wherein the processing unit (20) is configured to generate radio signals and provide the generated radio signals to the transceiver (10).

12. Communication device (1) according to any of claims 1 to 11, wherein the communication device (1) is a handheld radio.

13. Method for providing uninterrupted power to a mobile communication device (1), the communication device (1) comprising a first battery (31) and a second battery (32), the method comprising:
providing (S1) power from the first battery (31) to a transceiver (10) and a processing unit (20) of the communication device (1),
switching (S2) the power supply to provide power from the second battery (32) to the transceiver (10) and the processing unit (20); and
detaching (S3) the first battery (31) after the power supply has switched to the second battery (32).

14. Method according to claim 13, comprising:
attaching a further battery (31) to the communication device (1); and
switching back the power supply to provide power from the further battery (31) to a transceiver (10) and a processing unit (20) of the communication device (1).

15. Method according to claim 13 or 14, comprising:
charging the second battery (32) by power from the first battery (31).
